# DEMANDE DE BREVET EUROPEEN

(11) **EP 1 882 608 A2**
(43) Date de publication de la demande: **30.01.2008**
(21) Numéro de dépôt: 07113452.2
(22) Date de dépôt: 30.07.2007
(51) Int. Cl.: B60N 2/28

(54) **Siège automobile pour enfant, comprenant des moyens de guidage d'une sangle ventrale**

(30) Priorité: 28.07.2006 FR 0606961
(71) Demandeur: DOREL FRANCE SA, 49309 Cholet Cedex (FR)
(72) Inventeur: Renaudin, François, 49300 Cholet (FR)
(74) Mandataire: Bioret, Ludovic

(57) **Abrégé**

L'invention concerne un siège auto pour enfant, destiné à être solidarisé au siège d'un véhicule automobile à l'aide d'au moins une sangle de sécurité équipant ledit véhicule, dite sangle ventrale, ledit siège comprenant une partie formant dossier (11) et une partie formant assise (12), comprenant ou reposant sur un support (13) prenant appui sur ledit siège du véhicule automobile, ledit support définissant quatre portions, une portion frontale, éloignée dudit dossier, une portion arrière, voisine dudit dossier, et deux portions latérales, ledit support étant adapté pour recevoir ladite sangle ventrale (14) dans ou sur ladite portion frontale (131).

Ladite portion frontale (131) et une majeure partie de chacune desdites portions latérales définissent une surface de contact s'étendant selon un plan sensiblement vertical, et lesdites portions latérales portent chacune au moins un élément guide-sangle (15) latéral placé à proximité de ladite portion arrière, apte à recevoir ladite sangle ventrale (13), de façon à maintenir ladite sangle ventrale plaquée sensiblement verticalement le long de toute ladite surface de contact.

## Description

### 1. Domaine de l'invention

Le domaine de l'invention est celui de la puériculture.

Plus précisément, l'invention concerne les sièges auto pour enfant, destinés à être installés sur un siège d'un véhicule automobile, et maintenus par les sangles d'une ceinture de sécurité de ce dernier.

Plus précisément, l'invention concerne les sièges auto présentant sur leur partie inférieure une zone de guidage de la sangle ventrale de la ceinture de sécurité, s'étendant sur une face avant du siège auto, opposée au dossier de ce dernier.

### 2. Solutions de l'art antérieur

On connaît de très nombreux types de siège auto. Selon une technique classique, les sièges auto sont généralement maintenus à l'aide de la ceinture de sécurité du véhicule.

Le plus souvent, la ceinture de sécurité circule au niveau du dossier du siège auto, pour plaquer celle-ci contre le dossier du siège ou de la banquette du véhicule.

Selon une autre approche, récemment développée, on a également proposé des systèmes de fixation par pinces rigides, venant se connecter à des tiges métalliques prévues à cet effet dans le véhicule (système Isofix (marque déposée)).

Une autre approche a également été développée, consistant à faire passer la sangle ventrale de la ceinture de sécurité du véhicule sur une surface d'appui s'étendant en partie inférieure du siège auto, dans une zone éloignée du dossier. Un mode de réalisation particulier de cette technique est par exemple décrit dans le document de brevet EP-1 406 784.

Cette dernière technique présente certains avantages, notamment en termes d'ergonomie. En effet, la mise en place de la ceinture de sécurité est relativement aisée par rapport aux approches consistant à faire passer les sangles derrière le dossier, dans différents systèmes permettant d'assurer le maintien du siège.

L'invention concerne plus précisément cette troisième approche de fixation d'un siège auto.

### 3. Inconvénients de l'art antérieur

L'un des inconvénients majeurs de cette approche est que le siège auto est insuffisamment maintenu latéralement, et soumis à un débattement latéral important. Par exemple une poussée sur un côté du siège peut provoquer une forte inclinaison de ce siège. Même si le siège est suffisamment maintenu en cas de choc, cela confère à tout le moins une impression de danger, ainsi qu'un manque de confort pour l'enfant.

En outre, le siège peut venir heurter un passager installé à côté du siège auto.

### 4. Objectifs de l'invention

L'invention a notamment pour objectif de pallier ces différents inconvénients de l'art antérieur.

Plus précisément, un objectif de l'invention est de fournir un siège auto présentant un passage de sangle s'étendant vers l'avant, sur sa zone inférieure, qui soit moins soumis à un débattement latéral, notamment en cas de choc ou de changement de direction du véhicule.

Ainsi, un objectif de l'invention est de fournir une telle technique permettant d'augmenter le confort de l'enfant en limitant les mouvements du siège auto.

L'invention a encore pour objectif de fournir une telle technique, permettant d'éviter que le siège auto vienne heurter un passager.

L'invention a également pour objectif de fournir une telle technique, qui soit simple et peu coûteuse à mettre en oeuvre, facile à installer à désinstaller pour tout utilisateur.

### 5. Principes généraux de l'invention

Ces objectifs, ainsi que d'autres qui apparaîtront plus clairement par la suite, sont atteints à l'aide d'un siège auto pour enfant, destiné à être solidarisé au siège d'un véhicule automobile à l'aide d'au moins une sangle de sécurité équipant ledit véhicule, dite sangle ventrale, ledit siège comprenant une partie formant dossier et une partie formant assise, comprenant ou reposant sur un support prenant appui sur ledit siège du véhicule automobile, ledit support définissant quatre portions, une portion frontale, éloignée dudit dossier, une portion arrière, voisine dudit dossier, et deux portions latérales, ledit support étant adapté pour recevoir ladite sangle ventrale dans ou sur ladite portion frontale.

Selon l'invention, ladite portion frontale et une majeure partie de chacune desdites portions latérales définissent une surface de contact s'étendant selon un plan sensiblement vertical, et lesdites portions latérales portent chacune au moins un élément guide-sangle latéral placé à proximité de ladite portion arrière, apte à recevoir ladite sangle ventrale, de façon à maintenir ladite sangle ventrale plaquée sensiblement verticalement le long de toute ladite surface de contact.

Ainsi, la sangle ventrale ceinture le support, jusqu'à l'arrière de celui-ci (ou au moins à proximité de cet arrière). En d'autres termes, le trajet suivi par la sangle entre la portion frontale et le point de fixation de la sangle n'est pas un segment de droite, mais définit au contraire un angle proche de l'angle droit, formé proximité de l'arrière du siège. De cette façon, le débattement latéral est simplement et efficacement réduit, tout en conservant le passage de la sangle au niveau de la portion frontale.

Il est important de noter que la sangle est maintenue sensiblement verticale lorsqu'elle est plaquée le long de la surface de contact, pour assurer de façon efficace le maintien. Dans le cas contraire, c'est-à-dire si la sangle s'étendait dans un plan horizontal, celle-ci se vrillerait en présence d'un déplacement latéral, ne permettant pas de lutter efficacement contre le débattement latéral.

Ces éléments guide-sangle facilitent par ailleurs la mise en oeuvre de la sangle, en permettant de confirmer que son positionnement est correct, de façon visuelle directe.

De façon avantageuse, le siège auto comprend au moins un élément guide-sangle frontal s'étendant parallèlement à au moins une partie de ladite portion frontale.

Selon un mode de réalisation particulier, au moins un desdits éléments guide-sangle définit un logement, en coopération avec ledit support, présentant un fond et une paroi sensiblement verticale.

Dans ce cas, avantageusement, au moins un desdits éléments guide-sangle présente une partie supérieure de recouvrement dudit logement.

Ceci sécurise le maintien, et permet à l'utilisateur de valider que le montage est correctement effectué.

Ladite paroi sensiblement verticale et ladite partie supérieure peut notamment définir une fente de passage pour ladite sangle ventrale.

Selon un autre aspect de l'invention, ladite paroi sensiblement verticale peut s'étendre sur au moins une portion de la largeur de ladite sangle.

Ceci peut permettre de faciliter le montage de la sangle. Dans ce cas, le guide-sangle peut être adapté pour amener la sangle dans la bonne position, lorsqu'elle est lâchée par l'utilisateur et/ou tendue.

Notamment, ladite paroi sensiblement verticale peut coopérer avec un plan incliné s'éloignant dudit siège auto.

Selon un mode de réalisation particulier, le siège-auto comprend au moins deux éléments guide-sangle frontaux, distribués symétriquement.

Avantageusement, le dispositif de l'invention comprend un élément guide-sangle frontal s'étendant sur une partie essentielle de ladite portion frontale.

Selon une caractéristique particulière de l'invention, au moins un desdits éléments guide-sangle comprend au moins un élément mobile pour faciliter la mise en place et/ou le retrait de ladite sangle ventrale.

Il peut par exemple s'agir d'un élément mobile en rotation, dans lequel on insère la sangle avant de le ramener dans une position de travail.

Préférentiellement, au moins un desdits éléments guide-sangle comprend et/ou coopère avec un élément de guidage destiné à amener ladite sangle ventrale dans une position correcte.

### 6. Liste des figures

D'autres caractéristiques et avantages de l'invention apparaîtront plus clairement à la lecture de la description suivante de deux modes de réalisation préférentiels, donnés à titre de simples exemples illustratifs et non limitatifs, et des dessins annexés, parmi lesquels :
- la figure 1 présente schématiquement un siège pour l'enfant selon l'invention, vu de côté ;
- les figures 2 et 2b illustrent schématiquement le montage d'une sangle ventrale, respectivement selon l'art antérieur et selon l'invention ;
- la figure 3 présente un mode de réalisation particulier de l'invention ;
- la figure 4 est une vue agrandie des moyens de guidage de sangle du siège de la figure 3 ;
- les figures 5a à 8b présentent de façon simplifiée différents modes de réalisation envisageables de l'invention, les figures 5a, 6a, 7a et 8a présentant une portion latérale de l'embase, et les figures 5b, 6b 7b et 8b présentant une vue de dessus en coupe de la même embase;
- la figure 9 présente encore un autre mode de réalisation des moyens guide-sangle, présentant un plan incliné.

### 7. Description d'un mode de réalisation particulier de l'invention

Le principe général de l'invention est donc d'assurer le guidage d'une sangle d'une ceinture de sécurité ventrale, de façon que le siège pour enfant ne soit pas soumis à de forts débattements latéraux, par exemple lorsque le véhicule subit un choc ou aborde une courbe relativement rapidement.

Pour cela, la sangle ventrale est guidée d'une part sur la portion de l'embase du siège dirigée vers l'avant du véhicule (c'est-à-dire éloignée du dossier du siège de l'enfant), mais également le long des portions latérales de cette embase, pour maintenir la sangle le long de cette embase.

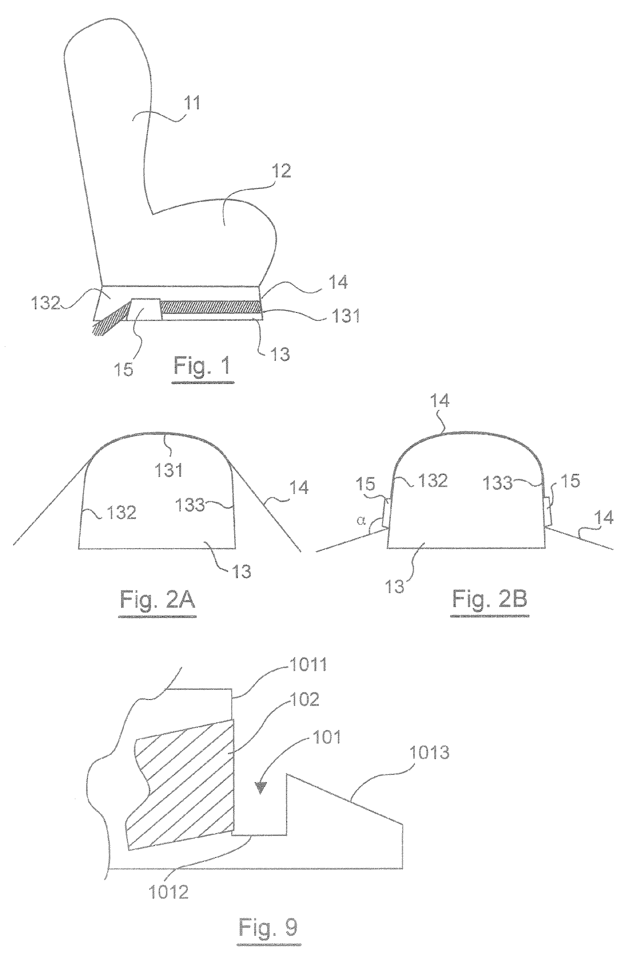

Un tel siège auto est illustré par la figure 1. Il comprend classiquement un dossier 11, une assise 12 et une embase, ou socle, 13, sur laquelle l'assise est montée (le cas échéant de façon mobile, en pivotement et/ou en inclinaison). Selon les cas, l'embase 13 peut servir de guide pour l'inclinaison et/ou la rotation du siège, permettre de désolidariser le siège de l'embase, ou correspondre à la partir inférieure du siège, formant support de l'assise.

L'embase 13 repose sur la banquette ou le siège du véhicule, et coopère avec la ceinture de sécurité, et notamment la sangle ventrale 14, pour maintenir le siège auto solidaire du véhicule.

L'embase 13 présente donc, sur sa portion frontale 131, une surface ou une portion de guidage de la sangle.

L'embase 13 porte par ailleurs un élément guide-sangle 15, monté sur la portion latérale 132 de l'embase, qui assure un maintien de la sangle 14 le long d'une grande partie de cette portion latérale.

Ainsi, le siège est mieux maintenu, et notamment moins sensible aux débattements latéraux. En effet, comme on le voit sur la figure 2b, qui illustre schématiquement l'embase 13 vue de dessus la portion frontale 131 de cette embase forme une zone de guidage de la sangle 14. Dans le cas des techniques de l'art antérieur, illustrées par la figure 2a, la sangle est éloignée des portions latérales 132 et 133, ce qui introduit un jeu relativement important, et donc des débattements latéraux.

En revanche, dans le cas d'un siège selon l'invention, comme illustré en figure 2b, les éléments guide-sangle 15 plaquent la sangle ventrale 14 le long d'une grande partie des portions latérales 132 et 133. On comprend aisément que, dans ce cas, le débattement latéral est fortement réduit, améliorant l'impression de sécurité et le confort de l'enfant.

En d'autres termes, l'approche de l'invention force la sangle 14 à former un angle α, au voisinage de l'arrière du siège auto, c'est-à-dire au voisinage du dossier du véhicule, alors que, selon l'art antérieur (figure 2a) elle s'étend transversalement, en ligne droite. Cet angle α est théoriquement proche d'un angle droit (et en pratique plus ouvert qu'un angle droit, par exemple 100 à 115°, car le guide-sangle est un peu déporté par rapport à l'arrière du siège pour des raisons d'ergonomie, liées notamment à l'installation de la sangle), de façon que la sangle court presque parallèlement le long du dossier du véhicule, entre le point de fixation de la sangle et l'élément guide-sangle 15, puis sensiblement perpendiculairement à ce dossier, le long de la portion latérale 132.

On note que la sangle 14 est maintenu verticalement, ou sensiblement verticalement, plaquée le long de la surface de contact, ou d'apppui, définie par la portion frontale et les portions latérales.

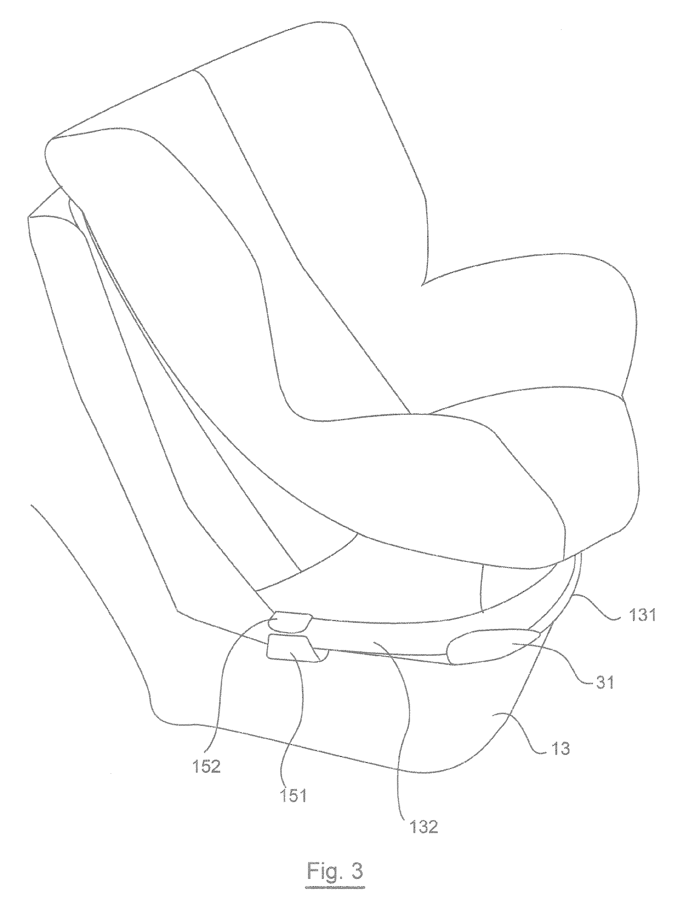

La figure 3 illustre un exemple de réalisation de l'invention. L'embase 13 porte d'une part, sur la portion latérale 132, un premier guide-sangle 15, qui se trouve à proximité du dossier du siège et d'autre part, un second guide-sangle 31 monté à la jonction des portions latérale 132 et frontale 131.

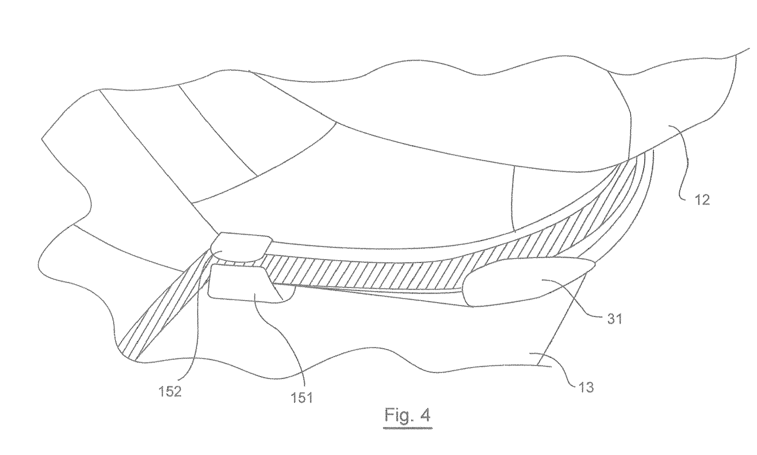

Ces deux éléments de guidage apparaissent plus clairement sur la vue agrandie de la figure 4.

L'élément 31 présente une forme sensiblement triangulaire, facilitant la mise en place de la sangle.

L'élément 15 définit un logement pour la sangle 14, avec une portion inférieure 151 de section sensiblement en forme de L destinée à recevoir la sangle, et une portion 152 de recouvrement, séparées par une fente 153. Ainsi, l'utilisateur introduit la sangle par la fente 153, et celle-ci est ensuite guidée le long de l'embase par l'élément 151. L'élément 152 évite que la sangle se dégage de façon non souhaitée ni contrôlée du logement formé par ce guide-sangle 15.

Ainsi, selon l'invention, le guide-sangle maintient la sangle le long de l'embase, ou à proximité de celle-ci, jusqu'au voisinage de l'arrière du siège, et donc à proximité du dossier du véhicule.

Plusieurs variantes de mises en oeuvre peuvent être envisagées, pour assurer cette fonction.

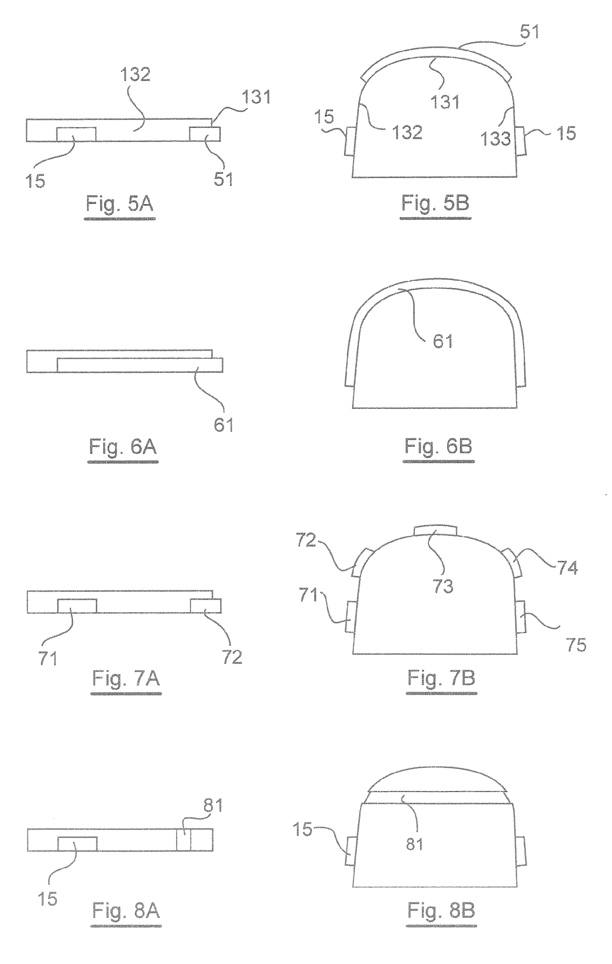

Ainsi, sur les figures 5a et 5b, on a prévu d'une part un guide-sangle 15 en partie arrière de la portion latérale 132, et d'autre part un guide-sangle supplémentaire 51 s'étendant sur l'intégralité de la portion frontale 131, ou à tout le moins sur une grande partie de celle-ci.

Selon une autre approche, illustrée par les figures 6a et 6b, on peut prévoir un guide-sangle unique 61, s'étendant sur l'ensemble de la portion frontale 131 et sur une majeure partie des deux portions latérales 132 et 133.

Selon le mode de réalisation illustré par les figures 7a et 7b, on prévoit une pluralité de guide-sangles 71, 72, 73, 74 et 75 distribués sur l'ensemble de la distance sur laquelle la sangle doit être guidée.

Par ailleurs, comme illustré par les figures 8a et 8b, il est à noter qu'il est important, selon l'invention, que la sangle soit plaquée le long d'une majeure partie des portions latérales de l'embase. En revanche, il n'est pas obligatoire qu'elle circule sur la portion frontale. Une zone de guidage peut être prévue à l'intérieur de cette portion centrale, par exemple sous la forme d'une fente 81.

Selon un aspect particulier, adapté notamment à la portion frontale, le guide-sangle peut définir un logement tronqué, comme illustré par la vue en coupe de la figure 9. Cette dernière illustre la portion frontale de l'embase, dans un mode de réalisation dans lequel le guide-sangle peut être réalisé par moulage de l'embase.

On définit ainsi un logement 101 pour la sangle 102, formé par la surface d'appui 1011 de la sangle, un fond 1012 et une paroi 1013 s'étendant sur quelques centimètres ou millimètres (correspondant, dans un mode de réalisation particulier, à une moitié, voire moins, de la largeur de la sangle). Cette hauteur limitée facilite notamment la mise en place de la sangle.

La paroi 1013 se prolonge, en s'éloignant du logement 101, d'un plan incliné 103 pouvant jouer une fonction d'aide et de guidage à la bonne mise en place de la sangle 102. En effet, si l'utilisateur place la sangle sur le plan incliné 103, il apparaît clairement qu'elle ne sera pas maintenue efficacement. En adaptant la configuration du plan incliné 103, ce dernier guide directement la sangle 102 dans le logement 101 lorsque la sangle est tendue. On évite ainsi une mauvaise utilisation potentielle, et on augmente la sécurité.

Plus généralement, on peut prévoir des moyens de guidage qui amènent systématiquement la sangle dans une bonne position au niveau de l'embase et des guide-sangle.

Il est également possible de prévoir que des guide-sangles comprennent des moyens mobiles, pour faciliter l'insertion ou le retrait de la sangle.

## Revendications

1. Siège auto pour enfant, destiné à être solidarisé au siège d'un véhicule automobile à l'aide d'au moins une sangle de sécurité équipant ledit véhicule, dite sangle ventrale,
ledit siège comprenant une partie formant dossier et une partie formant assise, comprenant ou reposant sur un support prenant appui sur ledit siège du véhicule automobile, ledit support définissant quatre portions, une portion frontale, éloignée dudit dossier, une portion arrière, voisine dudit dossier, et deux portions latérales, ledit support étant adapté pour recevoir ladite sangle ventrale dans ou sur ladite portion frontale,
**caractérisé en ce que** ladite portion frontale et une majeure partie de chacune desdites portions latérales définissent une surface de contact s'étendant selon un plan sensiblement vertical,
et **en ce que** lesdites portions latérales portent chacune au moins un élément guide-sangle latéral placé à proximité de ladite portion arrière, apte à recevoir ladite sangle ventrale, de façon à maintenir ladite sangle ventrale plaquée sensiblement verticalement le long de toute ladite surface de contact.

2. Siège auto pour enfant selon la revendication 1, **caractérisé en ce qu'**il comprend au moins un élément guide-sangle frontal s'étendant parallèlement à au moins une partie de ladite portion frontale.

3. Siège auto pour enfant selon l'une quelconque 1 et 2, **caractérisé en ce qu'**au moins un desdits éléments guide-sangle définit un logement, en coopération avec ledit support, présentant un fond et une paroi sensiblement verticale.

4. Siège auto pour enfant selon la revendication 3, **caractérisé en ce qu'**au moins un desdits éléments guide-sangle présente une partie supérieure de recouvrement dudit logement.

5. Siège auto pour enfant selon la revendication 4, **caractérisé en ce que** ladite paroi sensiblement verticale et ladite partie supérieure définissent une fente de passage pour ladite sangle ventrale.

6. Siège auto pour enfant selon l'une quelconque des revendications 3 et 5,
**caractérisé en ce que** ladite paroi sensiblement verticale s'étend sur au moins une portion de la largeur de ladite sangle.

7. Siège auto pour enfant selon la revendication 6, **caractérisé en ce que** ladite paroi sensiblement verticale coopère avec un plan incliné s'éloignant dudit siège auto.

8. Siège auto pour enfant selon l'une quelconque des revendications 2 à 7,
**caractérisé en ce qu'**il comprend au moins deux éléments guide-sangle frontaux, distribués symétriquement.

9. Siège auto pour enfant selon l'une quelconque des revendications 2 à 7,
**caractérisé en ce qu'**il comprend un élément guide-sangle frontal s'étendant sur une partie essentielle de ladite portion frontale.

10. Siège auto pour enfant selon l'une quelconque des revendications 1 à 9,
**caractérisé en ce qu'**au moins un desdits éléments guide-sangle comprend au moins un élément mobile pour faciliter la mise en place et/ou le retrait de ladite sangle ventrale.

11. Siège auto pour enfant selon l'une quelconque des revendications 1 à 10,
**caractérisé en ce qu'**au moins un desdits éléments guide-sangle comprend et/ou coopère avec un élément de guidage destiné à amener ladite sangle ventrale dans une position correcte.
